# EUROPÄISCHE PATENTANMELDUNG

(11) **EP 4 321 373 A1**
(43) Veröffentlichungstag der Anmeldung: **14.02.2024**
(21) Anmeldenummer: 23186135.2
(22) Anmeldetag: 18.07.2023
(51) Int. Cl.: B60L 53/62

(54) **VERFAHREN ZUM BETRIEB EINES KRAFTFAHRZEUGS**

(30) Priorität: 09.08.2022 DE 102022208288
(71) Anmelder: VOLKSWAGEN AG, 38440 Wolfsburg (DE); AUDI AG, 85057 Ingolstadt (DE)
(72) Erfinder: STOLZ, Markus, 38471 Rühen (DE); WINTZHEIMER, Oliver, 85053 Ingolstadt (DE)
(74) Vertreter: FDST Patentanwälte

(57) **Zusammenfassung**

Die Erfindung betrifft ein Verfahren (58) zum Betrieb eines Kraftfahrzeugs (2), das ein Hochvoltbordnetz (10) und ein Niedervoltbordnetz (22) umfasst, die mittels eines Gleichspannungswandlers (20) verbunden sind. Das Hochvoltbordnetz (10) ist über eine Schalteinheit (30) mit einer Batterieeinheit (28) verbunden, die zwei Unterbereiche (38) aufweist, die mittels einer Verschaltungseinheit (46) elektrisch in Reihe und elektrisch parallel schaltbar sind. Bei dem Verfahren (58) wird die Schalteinheit (30) geöffnet, und mittels der Verschaltungseinheit (46) werden die Unterbereiche (38) elektrisch parallel verschaltet. Mittels des Gleichspannungswandlers (20) wird elektrische Energie von dem Hochvoltbordnetz (10) in das Niedervoltbordnetz (22) geleitet, sodass sich die elektrische Spannung des Hochvoltbordnetzes (10) reduziert. Wenn die elektrische Spannung des Hochvoltbordnetzes (10) sich um nicht mehr als einen Toleranzwert von der an der Batterieeinheit (28) anliegenden elektrischen Spannung unterscheidet, wird die Schalteinheit (30) geschlossen. Ferner betrifft die Erfindung ein Kraftfahrzeug (2) sowie ein Computerprogrammprodukt (56).

## Beschreibung

Die Erfindung betrifft ein Verfahren zum Betrieb eines Kraftfahrzeugs, das ein Hochvoltbordnetz und ein Niedervoltbordnetz umfasst, die mittels eines Gleichspannungswandlers verbunden sind. Ferner betrifft die Erfindung ein Kraftfahrzeug und ein Computerprogrammprodukt.

Kraftfahrzeuge, wie Personenkraftwagen, weisen für den Vortrieb einen Hauptantrieb auf, wobei der Hauptantrieb in zunehmendem Maße einen Elektromotor umfasst. Hierbei wird beispielsweise lediglich einer oder mehrere Elektromotoren für den Vortrieb des Kraftfahrzeugs herangezogen, sodass das Kraftfahrzeug als Elektrofahrzeug ausgestaltet ist. In einer Alternative hierzu umfasst das Kraftfahrzeug zusätzlich noch einen Verbrennungsmotor.

Für die Bestromung des Elektromotors wird üblicherweise ein Hochvoltbordnetz herangezogen, das mittels einer als Hochvoltbatterie ausgebildeten Batterieeinheit gespeist ist. Die Hochvoltbatterie selbst weist mehrere Batteriemodule auf, die meist zueinander baugleich sind. Jedes der Batteriemodule weist wiederum mehrere einzelne Batterien auf, von denen einige elektrisch in Reihe und einige elektrisch parallelgeschaltet sind. Somit wird mittels jedes der Batteriemodule eine elektrische Gleichspannung bereitgestellt, die ein Einfaches oder Vielfaches einer der Batterien ist.

Zum Laden der Hochvoltbatterie wird üblicherweise eine Ladesäule herangezogen. Mittels dieser wird üblicherweise eine elektrische Gleichspannung bereitgestellt, üblicherweise 400 V. Damit eine Ladedauer auch bei einer vergleichsweise großen Kapazität der Hochvoltbatterie vergleichsweise gering ist, ist es erforderlich, dass ein vergleichsweiser großer elektrischer Strom von der Ladesäule in das Kraftfahrzeug eingespeist wird. Infolgedessen ist es erforderlich, die einzelnen Komponenten des Kraftfahrzeugs auf den vergleichsweisen großen elektrischen Strom abzustimmen, insbesondere einen Leitungsquerschnitt zu erhöhen, damit elektrische Verluste nicht übermäßig sind. Dies erhöht das Gewicht des Kraftfahrzeugs sowie die Herstellungskosten.

Alternativ hierzu wird ist es möglich, die mittels der Ladesäule bereitgestellte elektrische Spannung zu erhöhen, und somit die Ladedauer zu verkürzen. Dabei wird meist eine elektrische Gleichspannung von 800 V verwendet. Dies hat den Vorteil, dass die bei Betrieb des Kraftfahrzeugs geführten elektrischen Ströme vergleichsweise gering sind, sodass ein Querschnitt und somit ein Gewicht der verwendeten Leitungen und daher auch Herstellungskosten reduziert werden können. Da die einzelnen Komponenten des Kraftfahrzeugs auf die erhöhte elektrische Spannung angepasst sind, ist es jedoch nicht mehr möglich, Ladesäulen zu verwenden, mittels derer lediglich 400 V bereitgestellt werden.

Zur Abhilfe hiervon ist es bekannt, eine Verschaltungseinheit zu verwenden, die ein Bestandteil der Batterieeinheit ist, und die Batteriemodule gleichmäßig auf zwei Untereinheiten aufzuteilen. Mittels der Verschaltungseinheit ist es dabei möglich, die Untereinheiten entweder elektrisch parallel oder elektrisch in Reihe zu schalten. Wenn das Kraftfahrzeug bewegt, also verwendet, wird, sind dabei die Untereinheiten elektrisch in Reihe geschaltet, sodass mittels der Batterieeinheit 800 V bereitgestellt werden, die mittels des Hochvoltbordnetzes geführt werden. Diese Einstellung der Verschaltungseinheit wird beibehalten, sofern eine Ladesäulen zum Laden herangezogen wird, mittels derer 800 V bereitgestellt werden.

Falls eine Ladesäule verwendet werden soll, mittels derer lediglich 400 V bereitgestellt werden, wird zunächst die Batterieeinheit von dem Hochvoltbordnetz getrennt und die Verschaltungseinheit derart eingestellt, dass die Untereinheiten elektrisch parallel geschaltet sind. Ein erneutes Anschließen an das Hochvoltbordnetz ist dabei aufgrund des vergleichsweise großen Spannungsunterschieds nicht möglich und würde zu einer Überbelastung der einzelnen Bauteile führen. Daher ist es erforderlich, die mittels des Hochvoltbordnetzes geführte elektrische Spannung auf 400 V zu senken. Hierfür kann die in dem Hochvoltbordnetz verbleibende elektrische Spannung mittels eines elektrischen Widerstands abgebaut werden, der hierfür zugeschaltet wird. Wenn in dem Hochvoltbordnetz die 400 V anliegen, wird erneut die Hochvoltbatterie zugeschaltet, und der Ladevorgang kann begonnen werden.

Bei diesem Vorgehen wird die in dem Hochvoltbordnetz überschüssige elektrische Energie in Verlustwärme umgesetzt, was zu einer verringerten Effizienz führt. Auch ist mittels des elektrischen Widerstands die Zielspannung von 400 V lediglich vergleichsweise ungenau einstellbar, sodass beim Anschließend der Batterieeinheit dennoch eine Spannungsdifferenz vorherrschen kann, die zu einer Belastung der einzelnen Bauteile führt.

Der Erfindung liegt die Aufgabe zugrunde, ein besonders geeignetes Verfahren zum Betrieb eines Kraftfahrzeugs sowie ein besonders geeignetes Kraftfahrzeug als auch ein besonders geeignetes Computerprogrammprodukt anzugeben, wobei vorteilhafterweise eine Effizienz und/oder ein Komfort erhöht sind, und wobei zweckmäßigerweise Betriebskosten verringert sind.

Hinsichtlich des Verfahrens wird diese Aufgabe durch die Merkmale des Anspruchs 1, hinsichtlich des Kraftfahrzeugs durch die Merkmale des Anspruchs 7 und hinsichtlich des Computerprogrammprodukts durch die Merkmale des Anspruchs 8 erfindungsgemäß gelöst. Vorteilhafte Weiterbildungen und Ausgestaltungen sind Gegenstand der jeweiligen Unteransprüche.

Das Verfahren dient dem Betrieb eines Kraftfahrzeugs. Das Kraftfahrzeug ist bevorzugt landgebunden und weist vorzugsweise eine Anzahl an Rädern auf, von denen zumindest eines, vorzugsweise mehrere oder alle, mittels eines Hauptantriebs angetrieben sind. Zum Beispiel ist der Hauptantrieb vollständig elektrisch ausgestaltet, und das Kraftfahrzeug ist beispielsweise ein Elektrofahrzeug. In einer Alternative weist der Antrieb zusätzlich einen Verbrennungsmotor auf, sodass das Kraftfahrzeug als Hybrid-Kraftfahrzeug ausgestaltet ist. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Das Kraftfahrzeug weist ein Hochvoltbordnetz auf. Insbesondere erfolgt mittels des Hochvoltbordnetzes ein Betrieb des etwaigen Hauptantriebs, der hierfür entsprechend mit dem Hochvoltbordnetz gekoppelt ist. Insbesondere weist das Hochvoltbordnetz eine Kapazität auf, oder eine Kapazität ist zumindest dem Hochvoltbordnetz zugeordnet, mittels welcher eine Spannungsstabilisierung erfolgt. Somit ist auch bei einem unterschiedlichen Betrieb der mittels des Hochvoltbordnetzes versorgten Bauteilen des Kraftfahrzeugs eine vergleichsweise stabile elektrische Spannung bereitgestellt. Zumindest jedoch weisen mittels des Hochvoltbordnetzes betriebene Komponenten, wie der Hauptantrieb und/oder etwaige Nebenaggregate, zur Stabilisierung der jeweils verwendeten elektrischen Spannung eine Kapazität auf, die folglich auf das Hochvoltbordnetz rückwirken und dieser insbesondere zugeordnet sind.

Das Kraftfahrzeug umfasst eine Batterieeinheit, die ein elektrischer Energiespeicher ist. Vorzugsweise ist die Batterieeinheit eine Hochvoltbatterie oder umfasst diese. Die Batterieeinheit umfasst insbesondere zwei Anschlüsse, die der elektrischen Kontaktierung mit weiteren Bestandteilen dienen. Hierfür sind die Anschlüsse vorgesehen und eingerichtet. Insbesondere liegt zwischen den Anschlüssen bei Betrieb eine bestimmte elektrische Gleichspannung an. Die Batterieeinheit umfasst zwei Unterbereiche, die auch als Batteriestränge bezeichnet sind. Jeder der Unterbereiche umfasst beispielsweise eine oder mehrere Batterien und ist zum Beispiel daraus gebildet. Besonders bevorzugt umfasst jeder Unterbereiche eines oder mehrerer Batteriemodule, die jeweils mehrere Batterien umfassen. Hierbei sind die Batterien jedes Batteriemoduls elektrisch in Reihe und/oder parallelgeschaltet, sodass mittels jedes Batteriemoduls eine bestimmte elektrische Gleichspannung bereitgestellt ist. Zum Beispiel sind die Batteriemodule zueinander baugleich, was Herstellungskosten reduziert. Die Batteriemodule der Unterbereiche sind zweckmäßigerweise elektrisch in Reihe geschaltet, sodass mittels jedes Unterbereichs das Vielfache der elektrischen Spannung bereitgestellt wird, die mittels jedes der Batteriemodule bereitgestellt ist. Alternativ oder in Kombination hierzu ist zumindest ein Teil der Batteriemodule jedes Unterbereichs elektrisch parallelgeschaltet. Insbesondere ist jeder der Unterbereiche mittels der entsprechenden Batteriemodule gebildet. Vorzugsweise sind die beiden Unterbereiche zueinander baugleich.

Die Batterieeinheit umfasst ferner eine Verschaltungseinheit die mehrere Schalter, wie Schütze, umfasst. Die Verschaltungseinheit dient hierbei der Verschaltung der Unterbereiche sowie der elektrischen Kontaktierung der Unterbereiche mit den Anschlüssen. Hierbei ist die Anordnung der Schalter derart, dass, je nach Einstellung der Schalter, die Unterbereiche zwischen den Anschlüssen elektrisch parallel oder elektrisch in Reihe geschaltet sind. Mit anderen Worten ist es möglich mittels Betätigung der Verschaltungseinheit, insbesondere mittels eines, mehrerer oder aller Schalter der Verschaltungseinheit, die Unterbereiche elektrisch parallel oder elektrisch in Reihe zu schalten. Infolgedessen ist die an den Anschlüssen anliegende elektrische Spannung, insbesondere die elektrische Gleichspannung, gleich der elektrischen Spannung, die mittels eines der Unterbereiche bereitgestellt ist, oder dem Doppelten hiervon, insbesondere sofern die beiden Unterbereiche zueinander baugleich sind. Zusammenfassend ist die an den Anschlüssen der Batterieeinheit anliegende elektrische Spannung abhängig von der Einstellung/Betätigung der Verschaltungseinheit, und es möglich, die mittels der Batterieeinheit bereitgestellte oder zumindest die an den Anschlüssen anliegende elektrische Spannung einzustellen. Insbesondere ist die an den Anschlüssen anliegende elektrische Spannung entweder 400 V oder 800 V, je nach Einstellung der Verschaltungseinheit.

Das Hochvoltbordnetz ist über eine Schalteinheit mit der Batterieeinheit verbunden, mittels derer es zweckmäßigerweise möglich ist, eine elektrische Kontaktierung des Hochvoltbordnetzes mit der Batterieeinheit zu erstellen oder zu unterbrechen. Die Schalteinheit weist insbesondere zwei Schalter auf, wobei jedem der Anschlüsse der Batterieeinheit jeweils einer der Schalter zugeordnet ist, die insbesondere nach Art von Schützen ausgestaltet sind. Zumindest jedoch ist einem der Anschlüsse der Batterieeinheit ein entsprechender Schalter zugeordnet. Somit wird bei Öffnen der Schalteinheit eine elektrische Kontaktierung der Batterieeinheit mit dem Hochvoltbordnetz unterbrochen. Falls die Schalteinheit geschlossen ist, also die Batterieeinheit mit dem Hochvoltbordnetz elektrisch kontaktiert ist, ist ein Übertrag von elektrischer Energie zwischen der Batterieeinheit und dem Hochvoltbordnetz möglich, wobei beispielsweise das Hochvoltbordnetz mittels der Batterieeinheit gespeist wird, oder wobei zum Beispiel von dem Hochvoltbordnetz elektrische Energie in die Batterieeinheit transferiert wird, insbesondere bei einem generatorisch Betrieb des etwaigen Hauptantriebs, wie einer Rekuperation. Insbesondere ist, wenn die Schalteinheit geschlossen ist, die an dem Hochvoltbordnetz anliegende elektrische Spannung gleich der mittels der Batterieeinheit bereitgestellten elektrischen Spannung, also der zwischen den Anschlüssen der Batterieeinheit anliegenden elektrischen Spannung. Zweckmäßigerweise ist der Schalteinheit zudem eine Sicherung oder dergleichen zugeordnet, sodass bei einer Fehlfunktion der Batterieeinheit diese von dem Hochvoltbordnetz getrennt werden kann.

Das Kraftfahrzeug umfasst ferner ein Niedervoltbordnetz, wobei mittels des Niedervoltbordnetzes eine im Vergleich zum Hochvoltbordnetz verringerte elektrische Spannung geführt wird, vorzugsweise eine Gleichspannung. Die elektrische Spannung des Niedervoltbordnetzes beträgt insbesondere 12 V, 24 V oder 48 V.

Das Hochvoltbordnetz und das Niedervoltbordnetzes sind mittels eines Gleichspannungswandlers elektrisch verbunden, sodass mittels des Gleichspannungswandlers elektrische Energie zwischen dem Hochvoltbordnetz und dem Niedervoltbordnetz ausgetauscht werden kann. Hierfür wird der Gleichspannungswandler vorzugsweise entweder als Hochsetzsteller oder Tiefsetzsteller betrieben. Beispielsweise weist der Gleichspannungswandler einen Hochsetzsteller und einen Tiefsetzsteller auf, oder dieser weist beispielsweise eine Brückenschaltung mit unterschiedlichen Schaltern auf. Zweckmäßigerweise ist der Gleichspannungswandler als kaskadierter/gestufter Ab-Aufwärtswandler (engl.: Buck-Boost Converter) ausgestaltet.

Das Verfahren sieht vor, dass die Schalteinheit geöffnet wird, sodass eine elektrische Kontaktierung der Batterieeinheit mit dem Hochvoltbordnetz beendet wird. Somit wird das Verfahren insbesondere lediglich dann ausgeführt, wenn zunächst die Schalteinheit geschlossen ist, also das Hochvoltbordnetzes mit der Batterieeinheit elektrisch kontaktiert ist. Aufgrund des Öffnens der Schalteinheit ist es nachfolgend nicht erforderlich, dass in dem Hochvoltbordnetz und an den Anschlüssen der Batterieeinheit die gleiche elektrische Spannung anliegt.

Nachfolgend werden mittels der Verschaltungseinheit die Unterbereiche elektrisch parallel verschaltet. Insbesondere wird somit das Verfahren lediglich dann durchgeführt, wenn die Unterbereiche vorher zunächst elektrisch in Reihe geschaltet waren. Vorzugsweise wird somit gemäß dem Verfahren die Verschaltung der Unterbereiche verändert, insbesondere derart, dass nunmehr an der Batterieeinheit eine verringerte elektrische Spannung anliegt. Zusammenfassend wird die Verschaltungseinheit derart eingestellt, dass die an der Batterieeinheit anliegende elektrische Spannung reduziert ist, insbesondere auch im Vergleich zu der im Hochvoltbordnetz noch anliegenden elektrischen Spannung, die zum Beispiel aufgrund der sich darin befindenden etwaigen Kapazitäten noch unverändert ist, oder zumindest noch größer ist.

In einem weiteren Arbeitsschritt wird mittels des Gleichspannungswandler elektrische Energie von dem Hochvoltbordnetz in das Niedervoltbordnetz geleitet, sodass sich die elektrische Spannung des Hochvoltbordnetzes reduziert. Mit anderen Worten reduziert sich die in dem Hochvoltbordnetz anliegende elektrische Spannung, und der Gleichspannungswandler wird insbesondere nach Art eines Abwärtswandler betrieben. Zusammenfassend wird somit mittels des Gleichspannungswandlers elektrische Energie aus dem Hochvoltbordnetz in das Niedervoltbordnetz übertragen, wobei ein weiteres Einspeisen von elektrischer Energie in das Hochvoltbordnetz mittels der Batterieeinheit aufgrund der geöffneten Schalteinheit nicht möglich ist. Infolgedessen reduziert sich die in dem Hochvoltbordnetz anliegende elektrische Spannung. Aufgrund der Ausgestaltung des Gleichspannungswandler ist es dabei insbesondere nicht möglich, die in dem Hochvoltbordnetz anliegende elektrische Spannung beliebig abzusenken, und es ist beispielsweise nicht möglich, mittels des Gleichspannungswandlers die in dem Hochvoltbordnetz anliegende elektrische Spannung auf unter 100 V zu reduzieren. Zum Beispiel ist der Gleichspannungswandler derart ausgestaltet. Somit sind Herstellungskosten des Gleichspannungswandlers reduziert.

Wenn die elektrische Spannung des Hochvoltbordnetzes sich um nicht mehr als einen Toleranzwert von der an der Batterieeinheit anliegenden elektrische Spannung unterscheidet, wird die Schalteinheit geschlossen, sodass das Hochvoltbordnetz insbesondere wiederum mittels des Batterieeinheit gespeist ist. Zweckmäßigerweise wird, zumindest sobald Schalteinheit geschlossen ist, das Transferieren der elektrischen Energie von dem Hochvoltbordnetz in das Niedervoltbordnetz beendet, sofern dies noch der Fall ist. Der Toleranzwert ist zweckmäßigerweise auf die Bauteile des Hochvoltbordnetzes, des Niedervoltbordnetz, des Gleichspannungswandlers, der Schalteinheit, der Batterieeinheit und/oder sonstiger Bestandteile des Kraftfahrzeugs angepasst. Zweckmäßigerweise ist der Toleranzwert kleiner als 20 V und beispielsweise größer als 5 V, und insbesondere ist der Toleranzwert gleich im Wesentlichen gleich 10 V, wobei zum Beispiel eine Abweichung von 5 V, 2 V oder 0 V vorhanden ist.

Aufgrund des Verfahrens ist es somit möglich, die mittels des Hochvoltbordnetzes geführte elektrische Spannung innerhalb einer vergleichsweise kurzen Zeitspanne zu reduzieren, nämlich auf die elektrische Gleichspannung die lediglich mittels eines der Unterbereiche bereitgestellt wird. Somit ist es insbesondere möglich den Betriebsmodus des Kraftfahrzeugs zu ändern, wobei aufgrund der vergleichsweise kurzen Zeitspanne keine Einbußen bei der Nutzung und somit eines Komforts für Nutzer vorhanden sind. Auch ist die Änderung des Betriebsmodus vergleichsweise schnell vollzogen, wenn diese direkt oder implizit von dem Nutzer initiiert wird. Somit ist ein Komfort ebenfalls erhöht. Aufgrund des Einspeisens der dabei im Hochvoltbordnetz überschüssigen elektrischen Energie in das Niedervoltbordnetz kann diese erweitern verwendet werden, was Verluste reduziert, weswegen eine Effizienz erhöht ist. Auch sind somit Betriebskosten verringert, zumal die elektrische Energie im Niedervoltbordnetz noch weiter zur Verfügung steht. Dort wird diese beispielsweise genutzt, um eine etwaige dem Niedervoltbordnetz zugeordnete Batterie zu laden oder ein mittels des Niedervoltbordnetzes betriebenes Nebenaggregat zu speisen.

Insbesondere umfasst das Kraftfahrzeug ein Steuergerät, das beispielsweise ein Bestandteil der Batterieeinheit oder hiervon separat ist. Vorzugsweise wird das Verfahren zumindest teilweise mittels des Steuergeräts durchgeführt, und das Steuergerät ist hierfür geeignet, insbesondere vorgesehen und eingerichtet. Mittels des Steuergeräts wird die Verschaltungseinheit zweckmäßigerweise eingestellt und somit betätigt. Hierfür ist das Steuergerät geeignet, insbesondere vorgesehen und eingerichtet. Das Steuergerät ist beispielsweise ein anwendungsspezifischer Schaltkreis (ASIC) oder umfasst diesen. Alternativ hierzu umfasst das Steuergerät beispielsweise einen Computer, wie einen Mikroprozessor.

Sobald die Schalteinheit geschlossen wurde, werden beispielsweise etwaige weitere mittels des Hochvoltbordnetzes betriebene Gleichspannungswandler, wie ein Umrichter, mittels derer mit dem Hochvoltbordnetz gespeiste Nebenaggregate betrieben sind, in einem anderen Betriebsmodus betrieben, sodass trotz der verringerten elektrischen Spannung des Hochvoltbordnetzes ein Weiterbetrieb der Nebenaggregate möglich ist.

Beispielsweise wird der Gleichspannungswandler derart betrieben, dass die Geschwindigkeit des Energietransfers maximal ist, sodass der Zeitpunkt, zu dem die Schalteinheit erneut geschlossen werden kann, und zu dem sich die elektrische Spannung des Hochvoltbordnetzes von der an der Batterieeinheit anliegenden elektrischen Spannung um weniger als den Toleranzwert unterscheidet, vergleichsweise bald erreicht wird. Besonders bevorzugt jedoch wird die Geschwindigkeit des Energietransfers mittels des Gleichspannungswandlers bei einer Annäherung der elektrischen Spannung des Hochvoltbordnetzes an die an der Batterieeinheit anliegende elektrische Spannung reduziert. Hierbei wird beispielsweise zunächst nach Öffnen der Schalteinheit der Gleichspannungswandler derart betrieben, dass die Geschwindigkeit des Energietransfers maximal ist. Sobald sich beispielsweise die in dem Hochvoltbordnetz anliegende elektrische Spannung von der mittels der Batterieeinheit bereitgestellten elektrischen Spannung um weniger als 100 V oder 50 V unterscheidet, wird die Geschwindigkeit verringert. Beispielsweise erfolgt das Verringern, also das Reduzieren, der Geschwindigkeit hierbei stufenweise, wobei zum Beispiel 2, 3 oder mehr (Geschwindigkeits-)Stufen vorhanden sind, wobei die Anzahl der Stufen zweckmäßigerweise geringer als 10 ist. Alternativ hierzu erfolgt das Verringern kontinuierlich.

Aufgrund der Verringerung der Geschwindigkeit des Energietransfers verringert somit auch die Geschwindigkeit der Änderung der mit dem Hochvoltbordnetz geführten elektrischen Spannung. Infolgedessen ist die Zeitdauer, in der sich die mit dem Hochvoltbordnetz geführte elektrische Spannung von der elektrischen Spannung der Batterieeinheit um weniger als den Toleranzwert unterscheidet, verlängert. Somit steht mehr Zeit zum Schließen der Schalteinheit zur Verfügung und das Ausbilden einer übermäßige Spannungsdifferenz zwischen der Batterieeinheit und dem Hochvoltbordnetz bis die Schalteinheit geschlossen ist, ist vermieden, auch falls noch weiterhin von dem Hochvoltbordnetz elektrische Energie abgeführt wird, beispielsweise aufgrund von Verlusten, wie einer Selbstentladung der etwaigen Kapazität, die dem Hochvoltbordnetz zugeordnet ist, oder aufgrund eines mitten des Hochvoltbordnetzes betriebenen Nebenaggregats. Somit ist eine Belastung der einzelnen Bauteile verringert und somit eine Lebensdauer dieser erhöht.

Beispielsweise wird der Gleichspannungswandler lediglich derart betrieben, dass mittels dessen die elektrische Energie von dem Hochvoltbordnetz in das Niedervoltbordnetz eingespeist wird, und sobald die mittels des Hochvoltbordnetzes geführte elektrische Spannung lediglich um den Toleranzwert größer als die mit der Batterieeinheit bereitgestellten elektrischen Spannung ist, wird die Schalteinheit geschlossen. Besonders bevorzugt jedoch wird mittels des Gleichspannungswandlers zunächst so lange elektrische Energie von dem Hochvoltbordnetz in das Niedervoltbordnetz geleitet, bis die elektrische Spannung des Hochvoltbordnetzes, also die von dem Hochvoltbordnetz geführte und dort anliegende elektrische Spannung, kleiner als die an der an der Batterieeinheit anliegenden elektrischen Spannung ist. Insbesondere erfolgt das Transferieren der elektrischen Energie so lange, bis die elektrische Spannung des Hochvoltbordnetzes um mehr als einen Grenzwert kleiner als die an der Batterieeinheit anliegende elektrische Spannung ist, wobei der Grenzwert zum Beispiel größer als 20 V oder 15 V ist. Nachfolgend wird mittels des Gleichspannungswandler s elektrische Energie von dem Niedervoltbordnetz in das Hochvoltbordnetz geleitet, sodass die elektrische Spannung des Hochvoltbordnetzes erneut ansteigt. Mit anderen Worten steigt die in dem Hochvoltbordnetz anliegende und von diesem geführte elektrische Spannung erneut an. Hierfür wird der Gleichspannungswandler insbesondere als Hochsetzsteller betrieben. Falls dann sich die elektrische Spannung des Hochvoltbordnetzes um nicht mehr als den Toleranzwert von der an der Batterieeinheit anliegenden elektrische Spannung unterscheidet, wird die Schalteinheit geschlossen. Hierbei nähert sich jedoch in die elektrische Spannung des Hochvoltbordnetzes von unterhalb der an der Batterieeinheit anliegenden elektrischen Spannung an. Aufgrund von Selbstentladung oder beispielsweise mittels des Hochvoltbordnetzes betriebenen Nebenaggregaten sinkt die elektrische Spannung des Hochvoltbordnetzes, sobald die Schalteinheit geöffnet ist, auch bei abgeschaltetem Gleichspannungswandler. Dieser Effekt führt in Verbindung mit dem Energietransfer von dem Hochvoltbordnetz zu dem Niedervoltbordnetz mittels des Gleichspannungswandlers zu einem vergleichsweise schnellen Absinken der elektrischen Spannung des Hochvoltbordnetzes, sodass während der Annäherung an die elektrische Spannung der Batterieeinheit von oben die Zeitdauer, in der sich die mit dem Hochvoltbordnetz geführte elektrische Spannung von der elektrischen Spannung der Batterieeinheit um weniger als den Toleranzwert unterscheidet, vergleichsweise kurz ist. Bei der Annäherung der elektrischen Spannung des Hochvoltbordnetzes von unten an die elektrische Spannung der Batterieeinheit wird der Effekt mittels des Transfers von elektrischer Energie aus dem Niedervoltbordnetz kompensiert, sodass die Zeitdauer verlängert ist. Somit kann sichergestellt werden, dass die Schalteinheit auch tatsächlich vollständig geschlossen ist, wenn sich die beiden (elektrischen) Spannungen um weniger als den Toleranzwert unterscheiden. Somit ist eine Belastung der Bauteile weiter reduziert.

Beispielsweise wird hierbei der Transfer von elektrischer Energie beendet, sobald die beiden elektrischen Spannungen sich um weniger als den Toleranzwert unterscheiden. Besonders bevorzugt jedoch wird mittels des Gleichspannungswandlers so lange elektrische Energie von dem Niedervoltbordnetz in das Hochvoltbordnetz geleitet, bis die Schalteinheit geschlossen ist. Besonders bevorzugt wird dabei mittels des Gleichspannungswandlers zunächst die elektrische Spannung des Hochvoltbordnetzes stabilisiert, sodass sich diese nicht mehr ändert, wenn sich die elektrische Spannung des Hochvoltbordnetzes um nicht mehr als den Toleranzwert von der an der Batterieeinheit anliegenden elektrische Spannung unterscheidet. Anschließend wird erst die Schalteinheit betätigt und geschlossen. Somit wird mittels des Gleichspannungswandlers insbesondere sichergestellt, dass keine weiteren Änderungen der elektrischen Spannung des Hochvoltbordnetzes mehr erfolgt, wenn begonnen wurde die Schalteinheit zu schließen, oder zumindest, wenn sich die beiden elektrischen Spannungen um weniger als den Toleranzwert unterscheiden. Somit werden etwaige Verluste oder eine Selbstentladung mittels des Gleichspannungswandlers weiter ausgeglichen, bis das Hochvoltbordnetz mittels der Batterieeinheit gespeist wird. Folglich ist eine Ausbildung von Spannungsdifferenzen vermieden oder diese sind zumindest weiter verringert, und eine Belastung ist weiter reduziert. So sind die Spannungsdifferenz insbesondere kleiner als 1 V oder 0,5 V.

Insbesondere wird währenddessen der sich ergebende elektrische Strom von dem Niedervoltbordnetz in das Hochvoltbordnetz erfasst, vorzugsweise während mittels des Gleichspannungswandlers eine Stabilisierung der elektrischen Spannung des Hochvoltbordnetzes erfolgt. Mit anderen Worten wird der elektrische Strom erfasst, der sich aufgrund des Energietransfers zum Ausgleichen ergibt, sodass sich die elektrische Spannung des Hochvoltbordnetzes nicht ändert, insbesondere wenn sich diese von der elektrischen Spannung der Batterieeinheit um weniger als den Toleranzwert unterscheidet. Das Erfassen erfolgt zweckmäßigerweise mittels des Gleichspannungswandlers.

Geeigneterweise wird anhand des erfassten elektrischen Stroms eine Diagnose durchgeführt. Mit anderen Worten wird der Wert des erfassten elektrischen Stroms für eine Diagnose verwendet. Beispielsweise wird der elektrische Strom mit einem vorgegebenen Wert verglichen, der sich beispielsweise aufgrund einer Selbstentladung einstellt, wie 0,5 A. Falls der elektrische Strom größer ist, wird beispielsweise ein Nebenaggregat mittels des Hochvoltbordnetzes betrieben, oder es liegt ein Kurzschluss vor. Alternativ oder in Kombination hierzu wird anhand der Zeitdauer, die benötigt wird, bis die elektrische Spannung des Hochvoltbordnetzes sich um nicht mehr als den Toleranzwert von der an der Batterieeinheit anliegenden elektrische Spannung unterscheidet, für die Diagnose herangezogen. Hierbei wird beispielsweise die elektrische Spannung des Batterieeinheit lediglich von oben erreicht, also lediglich mittels Energietransfers von dem Hochvoltbordnetz in das Niedervoltbordnetz, oder diese Diagnose wird auch in dem Fall durchgeführt, wenn die elektrische Spannung Hochvoltbordnetzes zunächst weiter reduziert wird, insbesondere bis die elektrische Spannung des Hochvoltbordnetzes die elektrische Spannung der Batterieeinheit um mehr als den etwaigen Grenzwert unterschreitet. Falls die Zeitdauer kürzer als ein vorgegebener Wert oder der Durchschnitt der letzten Zeitdauern bei vorhergehenden Durchführungen des Verfahrens liegt, ist beispielsweise eine Leitung des Hochvoltbordnetzes abgelöst. Falls die Zeitdauer länger ist, insbesondere sofern die elektrische Spannung der Batterieeinheit von unten angefahren wird, liegt insbesondere ein Kurzschluss vor.

Vorzugsweise wird anhand der Diagnose eine weitere Funktion durchgeführt, beispielsweise eine Meldung ausgegeben und/oder ein Betriebsmodus ausgewählt. Zum Beispiel wird, wenn anhand der Diagnose eine Fehlfunktion eines der Unterbereiche identifiziert wurde, nachfolgend lediglich der andere der Unterbereiche zum Speisen des Hochvoltbordnetzes verwendet. Dabei wird beispielsweise der etwaige Hauptantrieb mit der verringerten elektrischen Spannung betrieben, sodass trotz der Fehlfunktion/Fehlers dennoch ein Bewegen des Kraftfahrzeugs möglich ist.

Vorzugsweise umfasst das Kraftfahrzeug einen Ladeanschluss. Insbesondere ist der Ladeanschluss in eine Karosserie des Kraftfahrzeugs eingebracht und beispielsweise mittels eines schwenkbaren Deckels verschlossen. Der Ladeanschluss dient dem Anschluss an eine externe Ladeinfrastruktur und ist hierfür geeignet, insbesondere vorgesehen und eingerichtet. Hierfür weist der Ladeanschluss beispielsweise mehrere Kontakte auf, zweckmäßigerweise zumindest zwei. Hierbei ist insbesondere jedem der Kontakte jeweils einer der etwaigen Pole des Hochvoltbordnetzes zugeordnet. Der Ladeanschluss ist insbesondere über eine Anschlusseinheit elektrisch mit dem Hochvoltbordnetz verbunden, sodass ein elektrischer Stromfluss zwischen dem Ladeanschluss und dem Hochvoltbordnetz zumindest teilweise möglich ist. Die Anschlusseinheit weist dabei insbesondere einen oder mehrere Schalter auf, wobei zweckmäßigerweise jedem der Pole des Hochvoltbordnetzes einer der Schalter, die zum Beispiel als Schütz ausgestaltet sind, zugeordnet ist. Vorzugsweise umfasst somit die Anschlusseinheit einen oder mehrere Ladeschütze. Beispielsweise ist der Ladeanschluss nach Art eines Steckers ausgestaltet oder weist ein Kabel auf. Zweckmäßigerweise erfüllt der Ladeanschluss einen bestimmten Standard, beispielsweise den des Typ 1 oder 2. Insbesondere weist der Ladeanschluss eine Verriegelung auf, sodass ein Anschluss eines Kabels an dem Ladeanschluss möglich ist, wobei aufgrund der Verriegelung ein ungewolltes Ablösen vermieden ist.

Gemäß einer Weiterbildung, wird, nachdem die Schalteinheit geschlossen wurde, das Hochvoltbordnetz mit dem Ladeanschluss elektrisch kontaktiert. Hierfür wird insbesondere die Anschlusseinheit geschlossen, sodass ein elektrischer Stromfluss zwischen dem Ladeanschluss und dem Hochvoltbordnetz möglich ist. Somit ist es möglich, die Batterieeinheit über den Ladeanschluss und das Hochvoltbordnetz zu laden. Insbesondere wird in diesem Fall über den Ladeanschluss eine elektrische Gleichspannung von 400 V bereitgestellt, und das Verfahren wird insbesondere dann durchgeführt, wenn an dem Ladeanschluss die elektrische Gleichspannung von 400 V anliegt. Falls dahingegen an dem Ladeanschluss beispielsweise 800 V anliegen, wird das Verfahren nicht durchgeführt oder zumindest die Schalteinheit nicht geöffnet und die Unterbereiche werden insbesondere elektrisch in Reihe geschaltet oder verbleiben in dieser Verschaltung. Mit anderen Worten erfolgt das Parallelschalten der Unterbereiche lediglich dann, wenn an dem Ladeanschluss eine verringerte elektrische Spannung anliegt, die insbesondere geringer ist als die aktuelle elektrische Spannung des Hochvoltbordnetzes, und wenn die Batterieeinheit geladen werden soll. Sobald die elektrische Kontaktierung mit dem Ladeanschluss erstellt wurde, wird insbesondere ein Ladevorgang begonnen, sodass elektrische Energie in das Kraftfahrzeug, insbesondere die Batterieeinheit, eingespeist wird. Aufgrund des Verfahrens ist es somit möglich, unterschiedlichste Ladeinfrastrukturen zu verwenden, mittels derer also unterschiedliche Spannungsniveaus bereitgestellt werden. Somit ist eine Flexibilität beim Nutzen des Kraftfahrzeugs erhöht, und ein Komfort ist erhöht.

In einer Weiterbildung ist in die Anschlusseinheit zum Beispiel ein Gleichrichter integriert, mittels dessen erfolgt insbesondere eine Gleichrichtung einer an dem Ladeanschluss anliegenden Wechselspannung. Dabei wird der Gleichrichter insbesondere lediglich dann betrieben, wenn an dem Ladeanschluss eine Wechselspannung anliegt. Anderweitig, also wenn dort eine Gleichspannung anliegt, wird der Gleichrichter nicht betrieben.

Wenn das Einspeisen von elektrischer Energie über den Ladeanschluss beendet wurde, wird insbesondere die elektrische Verbindung zu dem Ladeanschluss unterbrochen und zweckmäßigerweise die elektrische Kontaktierung beendet, wofür zum Beispiel die etwaige Anschlusseinheit betätigt wird. Somit ist für einen Nutzer ein gefahrloses Entfernen eines etwaigen Ladekabels oder dergleichen möglich. Zudem wird insbesondere nachfolgend zunächst die Schalteinheit geöffnet, und mittels der Verschaltungseinheit werden die Unterbereiche elektrisch in Reihe geschalteten. Zudem wird zweckmäßigerweise mittels des Gleichspannungswandlers elektrische Energie von dem Niedervoltbordnetz in das Hochvoltbordnetz geleitet, sodass die elektrische Spannung des Hochvoltbordnetzes angehoben wird. Wenn sich diese von der elektrischen Spannung der Batterieeinheit um weniger als einen weiteren Toleranzwert, wie 10V, unterscheidet, wird insbesondere die Schalteinheit erneut geschlossen, und das Kraftfahrzeug kann somit insbesondere in gleicher Weise verwendet werden wie vor Durchführung des Verfahrens.

Das Kraftfahrzeug ist beispielsweise ein Personenkraftwagen (Pkw), ein Lastkraftwagen (Lkw) oder ein Bus. In einer weiteren Alternative ist das Kraftfahrzeug ein Flurförderfahrzeug. Das Kraftfahrzeug weist ein Hochvoltbordnetz auf. Hierbei ist das Hochvoltbordnetz geeignet, insbesondere vorgesehen und eingerichtet, eine elektrische Gleichspannung zu führen, die zweckmäßigerweise größer als 200 V, 300 oder 350 V ist. Insbesondere ist das Hochvoltbordnetz derart ausgestaltet, dass an diesem unterschiedliche Spannungsniveaus anliegen können. Geeigneterweise umfasst das Kraftfahrzeug einen Elektromotor, der dem Vortrieb des Kraftfahrzeuges dient, und der mittels des Hochvoltbordnetzes gespeist ist, vorzugsweise über einen Umrichter. Vorzugsweise handelt es sich somit bei dem Kraftfahrzeug um ein Elektrofahrzeug. Zweckmäßigerweise umfasst das Kraftfahrzeug eines oder mehrere Nebenaggregate, wie ein Klimakompressor, das ebenfalls mittels des Hochvoltbordnetzes betrieben ist.

Das Kraftfahrzeug weist ferner ein Niedervoltbordnetz auf, das geeignet, insbesondere vorgesehen und eingerichtet ist, ein im Vergleich zum Hochvoltbordnetz verringerte elektrische Spannung, nämlich eine Gleichspannung, zu führen. Dabei beträgt die elektrische Spannung geeigneterweise 12 V, 24 V oder 48 V. Insbesondere sind mittels des Niedervoltbordnetzes ein oder mehrere Nebenaggregate des Kraftfahrzeugs betrieben, die beispielsweise dem Komfort dienen, wie zum Beispiel ein Multimediasystem, oder ein Bordcomputer.

Das Hochvoltbordnetz und das Niedervoltbordnetz sind mittels eines Gleichspannungswandlers verbunden und somit elektrisch miteinander kontaktiert. Mittels des Gleichspannungswandler ist es hierbei möglich, elektrische Energie von dem Hochvoltbordnetz in das Niedervoltbordnetz zu übertragen, sodass der Gleichspannungswandler als Tiefsetzsteller wirkt. Hierfür wird die in dem Hochvoltbordnetz anliegende elektrische Spannung auf ein Spannungsniveau transferiert, die dem der im Niedervoltbordnetz anliegenden elektrischen Spannung entspricht oder zumindest zu dieser korrespondiert. Somit ist es beispielsweise möglich, eine dem Niedervoltbordnetz zugeordnete Batterie mittels des Hochvoltbordnetzes zu laden. Zudem ist es möglich, den Gleichspannungswandler als Hochsetzsteller zu betreiben und elektrische Energie von dem Niedervoltbordnetz in das Hochvoltbordnetz einzuspeisen. Hierfür wird die mittels des Niedervoltbordnetzes bereitgestellte elektrische Spannung erhöht, vorzugsweise auf die in dem Hochvoltbordnetz geführte elektrische Spannung.

Das Kraftfahrzeug umfasst ferner eine Batterieeinheit und eine Schalteinheit, wobei das Hochvoltbordnetz über die Schalteinheit mit der Batterieeinheit verbunden ist, also elektrisch verbunden und somit elektrisch kontaktiert ist. Somit ist es möglich, mittels der Schalteinheit die elektrische Kontaktierung der Batterieeinheit mit dem Hochvoltbordnetz einzustellen oder auch zu unterbrechen, je nach Einstellung der Schalteinheit. Insbesondere weist die Schalteinheit hierfür einen oder mehrere Schalter auf, die zum Beispiel nach Art eines Schützes ausgestaltet sind. Zweckmäßigerweise umfasst die Schalteinheit eine Sicherung, sodass bei einer Fehlfunktion der Batterieeinheit diese von Hochvoltbordnetz getrennt wird. Insbesondere weist die Batterieeinheit zwei Anschlüsse auf, von denen jeder jeweils einem der elektrische Potentiale des Hochvoltbordnetzes zugeordnet ist. Zweckmäßigerweise ist dabei jedem Anschluss der Batterieeinheit oder zumindest dem, mittels dessen das positive elektrische Potential bereitgestellt wird, einer der Schalter zugeordnet. Insbesondere ist das negative elektrische Potential der Batterieeinheit elektrisch gegen Masse geführt, ebenso wie das elektrische Potential des Hochvoltbordnetzes.

Die Batterieeinheit weist zwei Unterbereiche sowie eine Verschaltungseinheit auf. Beispielsweise sind die Unterbereiche zueinander baugleich, und/oder die Batterieeinheit weist noch weitere derartige Unterbereiche auf. Jeder Unterbereich umfasst eine oder mehrere Batterien, die jeweils zum Beispiel eine oder mehrere galvanische Elemente umfassen. Insbesondere sind hierbei die Batterien wiederaufladbar ausgestaltet und somit Sekundärbatterien. Zum Beispiel sind die Batterien direkt auf die Unterbereiche aufgeteilt, und hierfür insbesondere elektrisch parallel oder und/oder in Reihe geschaltet. Alternativ hierzu sind die Batterien zu Batteriemodulen zusammengefasst und hierfür beispielsweise elektrisch in Reihe und/oder parallel geschaltet. Die Batteriemodule jedes Unterbereichs sind dabei wiederum beispielsweise zueinander elektrisch parallel und/oder teilweise in Reihe geschaltet.

Jeder Unterbereich weist zweckmäßigerweise zwei Unteranschlüsse auf, an denen bei Betrieb eine elektrische Spannung anliegt, die insbesondere anhand der Verschaltung der Batterien jedes Unterbereich vorgegeben ist. Mittels der Verschaltungseinheit ist es möglich, die beiden Unterbereiche elektrisch in Reihe oder elektrisch parallel zu schalten, sodass je nach Verschaltung an den Anschlüssen der Batterieeinheit insbesondere entweder das Doppelte der mittels jedes der Unterbereichen bereitgestellten elektrischen Spannung oder die mittels eines der Unterbereiche bereitgestellte elektrische Spannung anliegt. Zusammenfassend ist es mittels der Verschaltungseinheit somit möglich, die Unterbereiche entweder elektrisch in Reihe oder elektrisch parallel zu schalten, insbesondere wahlweise und/oder in Abhängigkeit von aktuellen Anforderungen.

Die Verschaltungseinheit umfasst zweckmäßigerweise drei Schalter, die beispielsweise jeweils nach Art eines Schützes ausgestaltet sind. Hierbei ist einer der Unteranschlüsse eines der Unterbereiche über einen derartigen Schalter gegen einen der Unteranschlüsse der anderen Unterbereiche geführt. Zudem ist jeder dieser Unteranschlüsse über jeweils einen der verbleibenden Schalter gegen jeweils einen der Anschlüsse der Batterieeinheit geführt. Somit ist mit einer vergleichsweise geringen Anzahl an Bauteilen die Funktionsweise der Verschaltungseinheit realisierbar, weswegen Gestehungskosten reduziert sind.

Vorzugsweise ist das Kraftfahrzeug derart ausgestaltet, dass im Normalbetrieb, also wenn dieses bewegt oder bestimmungsgemäß genutzt wird, die Unterbereiche elektrisch in Reihe geschaltet sind. Insbesondere liegt hierbei an der Batterieeinheit und somit auch am Hochvoltbordnetz eine elektrische Spannung von 800 V an, und mittels jedes Unterbereichs wird somit eine elektrische Gleichspannung von 400 V im Normalbetrieb zur Verfügung gestellt.

Das Kraftfahrzeug ist gemäß einem Verfahren betrieben beim dem die Schalteinheit geöffnet und mittels der Verschaltungseinheit die Unterbereiche elektrisch parallel verschaltet werden. Mittels des Gleichspannungswandlers wird elektrische Energie von dem Hochvoltbordnetz in das Niedervoltbordnetz geleitet, sodass sich die elektrische Spannung des Hochvoltbordnetzes reduziert. Wenn die elektrische Spannung des Hochvoltbordnetzes sich um nicht mehr als einen Toleranzwert von der an der Batterieeinheit anliegenden elektrischen Spannung unterscheidet, wird die Schalteinheit geschlossen.

Das Kraftfahrzeug umfasst vorzugsweise ein Steuergerät, das geeignet, zweckmäßigerweise vorgesehen und eingerichtet ist, das Verfahren durchzuführen. Das Steuergerät ist hierbei beispielsweise mittels eins einzigen Geräts realisiert oder auf unterschiedliche Geräte aufgeteilt. Die Erfindung betrifft ebenfalls ein derartiges Steuergerät. Zum Beispiel ist das Steuergerät ein Bestandteil eines Batteriemanagementsystems. Das Steuergerät ist beispielsweise als anwendungsspezifischer Schaltkreis (ASIC) ausgestaltet oder umfasst einen programmierbaren Computer, wie einen Mikroprozessor. Insbesondere umfasst das Steuergerät einen zusätzlichen Speicher, auf dem ein Computerprogrammprodukt gespeichert ist, das bei Ausführung des Programms durch einen Computer, insbesondere den Mikroprozessor, diesen veranlassen, das Verfahren durchzuführen.

Das Computerprogrammprodukt umfasst eine Anzahl an Befehle, die bei der Ausführung des Computerprogrammprodukts, auch lediglich als Programm bezeichnet, durch einen Computer diesen veranlassen, ein Verfahren zum Betrieb eines Kraftfahrzeugs, das ein Hochvoltbordnetz und ein Niedervoltbordnetz umfasst, die mittels eines Gleichspannungswandlers verbunden sind, wobei das Hochvoltbordnetz über eine Schalteinheit mit einer Batterieeinheit verbunden ist, die zwei Unterbereiche aufweist, die mittels einer Verschaltungseinheit elektrisch in Reihe und elektrisch parallel schaltbar sind, durchzuführen. Dabei wird die Schalteinheit geöffnet, und mittels der Verschaltungseinheit werden die Unterbereiche elektrisch parallel verschaltet. Mittels des Gleichspannungswandlers wird elektrische Energie von dem Hochvoltbordnetz in das Niedervoltbordnetz geleitet, sodass sich die elektrische Spannung des Hochvoltbordnetzes reduziert. Wenn die elektrische Spannung des Hochvoltbordnetzes sich um nicht mehr als einen Toleranzwert von der an der Batterieeinheit anliegenden elektrischen Spannung unterscheidet, wird die Schalteinheit geschlossen.

Der Computer ist zweckmäßigerweise ein Bestandteil eines Steuergeräts oder Elektronik und beispielsweise mittels dieser gebildet. Der Computer umfasst vorzugsweise einen Mikroprozessor oder ist mittels dessen gebildet. Das Computerprogrammprodukt ist beispielsweise eine Datei oder ein Datenträger, der ein ausführbares Programm enthält, das bei einer Installation auf einem Computer das Verfahren automatisch ausführt.

Die Erfindung betrifft ferner ein Speichermedium, auf dem das Computerprogrammprodukt gespeichert ist. Ein derartiges Speichermedium ist beispielsweise eine CD-ROM, eine DVD oder eine Blu-Ray Disc. Alternativ hierzu ist das Speichermedium ein USB-Stick oder ein sonstiger Speicher, der zum Beispiel wiederbeschreibbar oder lediglich einmalig beschreibbar ist. Ein derartiger Speicher ist beispielsweise ein Flash Speicher, ein RAM oder ein ROM.

Die im Zusammenhang mit dem Verfahren erläuterten Weiterbildungen und Vorteile sind sinngemäß auch auf das Kraftfahrzeug / das Steuergerät das Computerprogrammprodukt/ das Speichermedium sowie untereinander zu übertragen und umgekehrt.

Nachfolgend wird ein Ausführungsbeispiel der Erfindung anhand einer Zeichnung näher erläutert. Darin zeigen:
- Fig. 1: schematisch vereinfacht ein Kraftfahrzeug, und
- Fig. 2: ein Verfahren zum Betrieb des Kraftfahrzeugs.

Einander entsprechende Teile sind in allen Figuren mit den gleichen Bezugszeichen versehen.

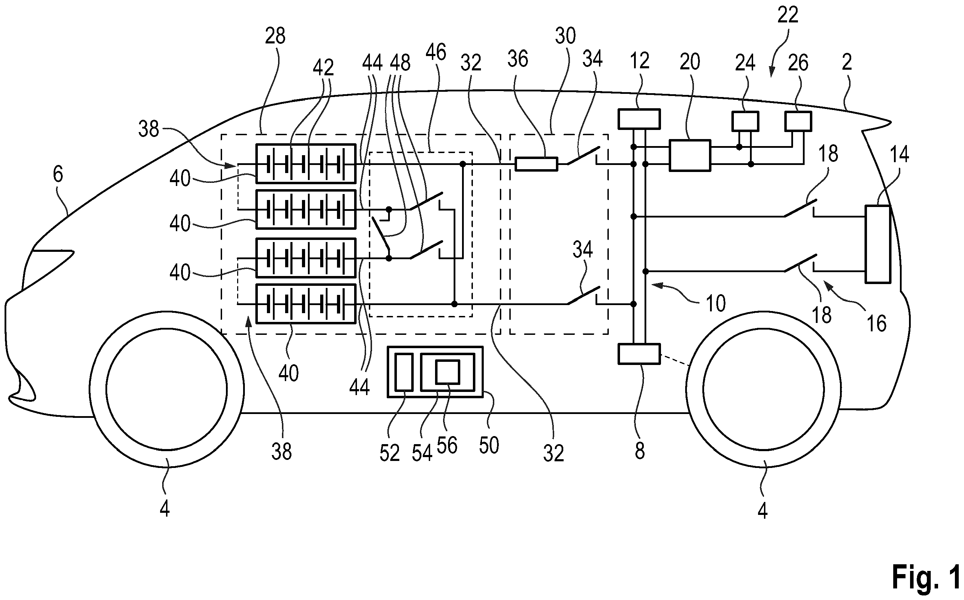

In Figur 1 ist schematisch vereinfacht ein Kraftfahrzeug 2 in Form eines Personenkraftwagens (Pkw) dargestellt. Das Kraftfahrzeug 2 weist mehrere Räder 4 auf, mittels derer ein Kontakt zu einer Fahrbahn erfolgt. Die Räder 4 sind über ein nicht näher dargestelltes Fahrwerk an einer Karosserie 6 des Kraftfahrzeugs 2 angebunden. Das Kraftfahrzeug 2 umfasst einen Hauptantrieb 8, mittels dessen zumindest einigen der Räder 4 angetrieben sind. Der Hauptantrieb 8 weist dabei einen Elektromotor auf, der ist mittels eines Hochvoltbordnetzes 10 betrieben ist. Mittels dessen wird auch ein erstes Nebenaggregat 12 in Form eines Klimakompressors einer Klimaanlage betrieben. Der Hauptantrieb 8 und das erste Nebenaggregat 12 sind daraufhin ausgelegt, dass mittels des Hochvoltbordnetzes 10 eine elektrische Gleichspannung von 800 V geführt wird. Das erste Nebenaggregat 12 und der Antrieb 8 weisen jeweils mehrere Kapazitäten, nämlich Kondensatoren, auf, die bei Betrieb über das Hochvoltbordnetz 10 geladen werden, und die jeweils einen lokalen Zwischenspeicher für die jeweils benötigte elektrische Energie darstellen.

Das Kraftfahrzeug 2 umfasst ferner einen Ladeanschluss 14, der über eine Anschlusseinheit 16 mit dem Hochvoltbordnetz 10 elektrisch verbunden ist. Die Anschlusseinheit 16 weist zwei Ladeschütze 18 auf, die somit Schalter darstellen, und von den denen jeweils einer einem der elektrischen Potentiale des Hochvoltbordnetzes 10 zugeordnet ist. Wenn die Ladeschütze 18 geschlossen sind, ist der Ladeanschluss 14 mit dem Hochvoltbordnetz 10 elektrisch kontaktiert. Falls die Ladeschütze 18 geöffnet sind, ist hingegen die elektrische Kontaktierung unterbrochen.

Zudem ist mit dem Hochvoltbordnetz 10 ein Gleichspannungswandler 20 elektrisch kontaktiert, der als kaskadierter/gestufter Ab-Aufwärtswandler ausgestaltet ist. Mit dem Gleichspannungswandler 10 ist ein Niedervoltbordnetz 22 elektrische kontaktiert, sodass das Niedervoltbordnetz 22 mit dem Hochvoltbordnetz 10 mittels des Gleichspannungswandlers 20 verbunden ist. Mittels des Niedervoltbordnetzes 22 wird bei Betrieb eine elektrische Gleichspannung von 48 V geführt und ist ein zweites Nebenaggregat 24 betrieben, bei dem es sich um eine Multimediaanlage handelt. Ferner ist das Niedervoltbordnetz 22 mit einer Batterie 26 elektrisch kontaktiert, mittels derer eine elektrische Gleichspannung von 12 V bereitgestellt wird. Das Niedervoltbordnetz 22 wird dabei mittels der Batterie 26 gespeist, wenn der Gleichspannungswandler 20 nicht betrieben wird. Jedoch ist es auch möglich, mittels des Gleichspannungswandlers 20 elektrische Energie aus dem Hochvoltbordnetz 10 in das Niedervoltbordnetz 22 einzuspeisen, sodass die Batterie 26 geladen wird und/oder das zweite Nebenaggregat 24 betrieben wird, wobei keine Energieentnahme aus der Batterie 26 erfolgt.

Das Kraftfahrzeug 2 umfasst ferner eine Batterieeinheit 28, die über einen Schalteinheit 30 mit dem Hochvoltbordnetz 10 elektrisch verbunden ist. Hierbei weist die Batterieeinheit 28 zwei Anschlüsse 32 auf, von denen jeder über jeweils einen Schütz 34 der Schalteinheit 30 gegen eine sind der elektrischen Potentiale des Hochvoltbordnetzes 10 geführt ist. Zudem ist einer der Anschlüsse 32, nämlich der dem positiven elektrische Potenzial zugeordnete, über eine Sicherungen 36 zu dem zugeordneten Schütz 34 geführt, sodass eine Sicherheit erhöht ist.

Die Batterieeinheit 28 weist zwei Unterbereiche 38 auf, wobei jeder Unterbereich 38 mehrere zueinander baugleiche Batteriemodule 40 aufweist, von denen pro Untereinheit 38 jeweils lediglich zwei dargestellt sind. Jedem der Unterbereiche 38 ist die gleiche Anzahl an Batteriemodulen 40 zugeordnet, sodass die Unterbereiche 38 zueinander baugleich sind. Jedes Batteriemodul 40 weist mehrere Batteriezellen 42 oder Batterien auf, die mittels nicht näher dargestellter galvanischer Elemente gebildet sind. Sämtliche Batteriemodule 40 jedes Unterbereichs 38 sind elektrisch in Reihe zwischen jeweils zwei Unteranschlüsse 44 des jeweiligen Unterbereichs 38 geschaltet.

Die Batterieeinheit 28 umfasst ferner eine Verschaltungseinheit 46, die drei Schalter 48, nämlich Schütze, umfasst. Einer der Unteranschlüsse 44 eines der Unterbereiche 38 ist mittels eines der Schalter 48 mit einem der Unteranschlüsse 44 des anderen Unterbereichs 38 elektrisch verbunden. Diese Unteranschlüsse 44 sind dabei mittels jeweils eines der verbliebenden Schalter 48 mit einem der Anschlüsse 32 der Batterieeinheit 28 elektrisch verbunden. Die verbleibenden Unteranschlüsse 44 jedes Unterbereichs 38 sind direkt gegen einen der Anschlüsse 32 geführt. Somit ist es möglich, mittels der Verschaltungseinheit 46, nämlich je nach Abhängigkeit der Einstellung der Schalter 48, die beiden Unterbereiche 38 entweder elektrisch in Reihe oder elektrisch parallel zu schalten, nämlich zwischen die Anschlüsse 32. Sofern die Unterbereiche 38 elektrisch in Reihe geschaltet sind, liegt hierbei zwischen an den Anschlüssen 32 eine elektrische Gleichspannung von 800 V an. Die somit die elektrische Spannung der Batterieeinheit 28 darstellt. Falls dahingegen die beiden Unterbereiche 38 elektrisch parallel geschaltet sind, liegt an den Anschlüssen 32 eine elektrische Spannung von 400 V an. Mit anderen Worten ist in diesem Fall die elektrische Spannung der Batterieeinheit 28 gleich 400 V.

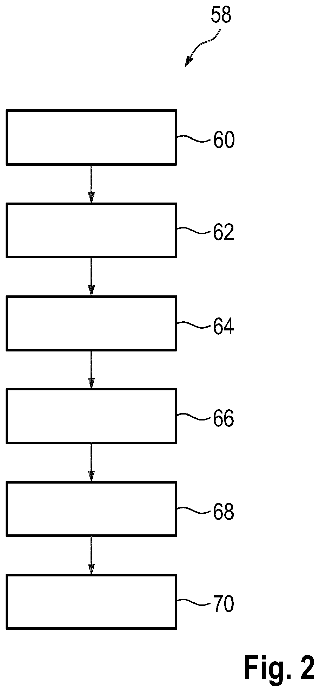

Das Kraftfahrzeug 2 umfasst ferner ein Steuergerät 50, mittels dessen die Schalteinheit 30, die Batterieeinheit 28, die Anschlusseinheit 16 sowie der Gleichspannungswandler 20 betrieben werden oder zumindest eingestellt werden können. Das Steuergerät 50 umfasst einen Computer 52 in Form eines programmierbaren Mikroprozessors. Zudem umfasst das Steuergerät 50 einen Speicher 54, auf dem ein Computerprogrammprodukt 56 gespeichert ist. Das Computerprogrammprodukt 56 weist mehrere Befehle auf, die bei der Ausführung des Programms durch den Computer 52 diesen veranlassen ein in Figur 2 dargestelltes Verfahren 58 zum Betrieb des Kraftfahrzeugs 2 auszuführen. Mit anderen Worten ist das Kraftfahrzeug 2 gemäß dem Verfahren 58 betrieben.

In einem ersten Arbeitsschritt 60 wird erkannt, dass an dem Ladeanschluss 14 über ein nicht näher dargestelltes Kabel eine Ladeinfrastruktur angeschlossen wurde, mittels derer eine elektrische Gleichspannung von 400 V bereitgestellt wird. Dabei befindet sich die Anschlusseinheit 16 in dem geöffneten Zustand, sodass die Ladeschütze 18 geöffnet sind, und folglich der Ladeanschluss 14 nicht elektrisch mit dem Bordnetz 10 elektrisch kontaktiert ist. Auch wird mittels nicht näher dargestellter Sensoren und/oder Bauteilen festgestellt, dass ein Laden der Batterieeinheit 28 mittels der Ladeinfrastruktur erfolgen soll. Hierfür werden beispielsweise von der Ladeinfrastruktur entsprechende Signale übermittelt.

Da der Hauptantrieb 8 und das erste Nebenaggregat 12 für Versorgung mit 800 V ausgelegt sind, liegen jedoch an dem Hochvoltbordnetz 10 als elektrische Spannung 800 V an, die mittels der Batterieeinheit 28 bereitgestellt wird. Hierfür ist die Verschaltungseinheit 46 derart eingestellt ist, dass die beiden Unterbereiche 38 elektrisch in Reihe geschaltet sind, und die Schalteinheit 30 befindest sich in den geschlossenen Zustand, sodass die Batterieeinheit 28 mit dem Hochvoltbordnetz 10 elektrisch kontaktiert ist. Infolgedessen besteht eine vergleichsweise gro-ße Spannungsdifferenz zwischen dem Hochvoltbordnetz 10 und dem Ladeanschluss 14.

In einem zweiten Arbeitsschritt 62 wird die Schalteinheit 30 geöffnet. Hierfür werden die beiden Schütz 34 geöffnet, sodass die elektrische Kontaktierung der Batterieeinheit 28 mit dem Hochvoltbordnetz 10 aufgehoben wird. In dem Hochvoltbordnetz 10 liegen dabei noch weiterhin die 800 V an, die aufgrund der Kapazitäten des Hauptantriebs 8 sowie des ersten Nebenaggregats 12 noch aufrechterhalten werden. Aufgrund einer Selbstentladung dieser sowie aufgrund von auftretenden Verlusten sinkt die elektrische Spannung des Hochvoltbordnetzes 10 ab, jedoch zunächst vergleichsweise langsam.

In einem dritten Arbeitsschritt 64, der beispielsweise zeitgleich oder nachfolgend zu dem zweiten Arbeitsschritt 62 durchgeführt wird, wird die Verschaltung der Untereinheiten 38 verändert. Hierfür werden zunächst sämtliche Schalter 48 geöffnet, und anschließend werden zwei der Schalter 48 geschlossen, sodass die beiden Unterbereiche 38 elektrisch parallel verschaltet sind. Mit anderen Worten werden mittels der Verschaltungseinheit 46 die Unterbereiche 38 elektrisch parallel verschaltet. Somit liegen an den Anschlüssen 32 der Batterieeinheit 28 ebenfalls 400 V an, genauso wie an dem Ladeanschluss 14.

In einem vierten Arbeitsschritt 66, der zeitgleich oder zeitlich nachfolgend zu dem dritten Arbeitsschritt 64, jedoch zeitlich nachfolgend zu dem zweiten Arbeitsschritt 20 durchgeführt wird, wird mittels des Gleichspannungswandlers 20 elektrische Energie von dem Hochvoltbordnetz 10 in das Niedervoltbordnetz 22 geleitet. Hierbei wird mittels der elektrischen Energie beispielsweise die Batterie 26 geladen. Aufgrund des Transfers der elektrischen Energie in das Niedervoltbordnetz 22 sinkt die elektrische Spannung des Hochvoltbordnetzes 10. Hierbei wird der Gleichspannungswandler 20 zunächst mit maximaler Leistung betrieben, sodass zunächst eine vergleichsweise große Menge elektrische Energie von dem Hochvoltbordnetz 10 in das Niedervoltbordnetz 22 übertragen wird, weswegen die elektrische Spannung des Hochvoltbordnetzes 10 zunächst vergleichsweise schnell absinkt.

Wenn sich die elektrische Spannung des Hochvoltbordnetzes 10 an die an der Batterieeinheit 28 anliegende Spannung angenähert hat, also wenn zwischen diesen lediglich eine Spannungsdifferenz von 50 V besteht und somit die elektrische Spannung des Hochvoltbordnetzes 450 V beträgt, wird die Geschwindigkeit kontinuierlich reduziert, wobei die geregelt erfolgt. Sobald dabei sich die elektrische Spannung des Hochvoltbordnetzes 10 nicht mehr als einen Toleranzwert von der an der Batterieeinheit 28 anliegenden elektrischen Spannung unterscheidet, wird der Gleichspannungswandler 20 stillgesetzt und der vierte Arbeitsschritt 66 beendet. Der Toleranzwert entspricht 10 V, und folglich wird der Gleichspannungswandler 20 stillgesetzt, wenn in dem Hochvoltbordnetz 10 eine elektrische Spannung von 410 V anliegen.

Gleich im Anschluss an den vierten Arbeitsschritt 66 wird ein fünfter Arbeitsschritt 68 durchgeführt, und die Schalteinheit 30 wird geschlossen, sodass die Batterieeinheit 28 erneut mit dem Hochvoltbordnetz 10 elektrisch kontaktiert ist. Zwar wird der Gleichspannungswandler 20 nicht mehr betrieben, jedoch sinkt bis zum vollständigen Schließen der Schalteinheit 30 aufgrund der Selbstentladung die elektrische Spannung des Hochvoltbordnetzes 10 noch weiter ab, bis die Schalteinheit 30 vollständig geschlossen ist, und die elektrische Spannung des Hochvoltbordnetzes 10 somit mittels der Batterieeinheit 28 stabilisiert wird. Alternativ wird bis der Gleichspannungswandler 20 noch während des fünften Arbeitsschritts 68 betrieben.

Sobald die Schalteinheit 30 geschlossen wurde, wird ein sechster Arbeitsschritt 70 durchgeführt, in dem die Anschlusseinheit 16 geschlossen wird, also die beiden Ladeschütze 18. Somit wird der Ladeanschluss 14 mit dem Hochvoltbordnetz 10 elektrisch kontaktiert, und der Ladevorgang wird begonnen. Hierbei wird über den Ladeanschluss 14 elektrischer Energie in das Hochvoltbordnetz 10 und von dort in die Batterieeinheit 28 eingespeist. In einer Weiterbildung erfolgt auch vor Beginn des Ladevorgangs zunächst eine Spannungsangleichung zwischen der an dem Ladeanschluss 14 anliegenden elektrischen Spannung und der aktuell mittels des Hochvoltbordnetzes 10 geführten elektrischen Spannung.

Sobald die Unterbereiche 38 geladen wurden, oder das Kabel aus den Ladeanschluss 14 entfernt wird, wird die Schalteinheit 30 geöffnet und die Verschaltungseinheit 46 wird derart eingestellt, dass die beiden Unterbereiche 38 wiederum elektrisch in Reihe geschaltet sind. Ferner wird mittels des Gleichspannungswandlers 20 elektrische Energie aus dem Niedervoltbordnetz 22 in das Hochvoltbatterie Bordnetz 10 geleitet, wofür der Batterie 26 elektrische Energie entnommen. Aufgrund des Energietransfers steigt die elektrische Spannung des Hochvoltbordnetzes 10 an. Wenn die elektrische Spannung des Hochvoltbordnetzes 10 gleich 800 V ist, wird die Schalteinheit 30 geschlossen, sodass die Batterie 28 erneut mit dem Hochvoltbordnetz 10 elektrisch kontaktiert ist.

Bei einer weiteren Ausgestaltung wird in dem vierten Arbeitsschritt 66 der Gleichspannungswandler 10 zunächst noch weiter betrieben. Mit anderen Worten wird mittels des Gleichspannungswandlers 20 noch weiterhin elektrische Energie in das Niedervoltbordnetz 22 geleitet, obwohl die elektrische Spannung des Hochvoltbordnetzes 10 gleich 410 V beträgt. Der Gleichspannungswandler 20 wird solange betrieben, bis die elektrische Spannung des Hochvoltbordnetzes 10 gleich 350 V ist, also um einen Grenzwert von 50 V unterhalb der elektrischen Spannung der Batterieeinheit 28 ist. Anschließend wird die Betriebsweise des Gleichspannungswandler 20 geändert, und mit diesem wird nun elektrische Energie von dem Niedervoltbordnetz 22 in das Hochvoltbordnetz 10 geleitet, sodass die elektrische Spannung das Hochvoltbordnetzes erneut ansteigt.

Zusammenfassend wird somit mittels des Gleichspannungswandler 20 so lange elektrische Energie von dem Hochvoltbordnetz 10 in das Niedervoltbordnetz 22 geleitet, bis die elektrische Spannung des Hochvoltbordnetzes 10 unterhalb der an der Batterieeinheit 28 anliegenden elektrischen Spannung ist. Nachfolgend wird mittels des Gleichspannungswandler 20 elektrische Energie von dem Niedervoltbordnetz 22 in das Hochvoltbordnetz 10 geleitet, sodass die elektrische Spannung des Hochvoltbordnetzes 10 erneut ansteigt.

Sobald die elektrische Spannung des Hochvoltbordnetzes 10 wiederum 400 V beträgt, wird die Geschwindigkeit des Energietransfers verringert, sodass trotzen der Selbstentladung mittels des Gleichspannungswandler 20 die elektrische Spannung des Hochvoltbordnetzes 10 konstant gehalten wird. Zudem wird der dabei über den Gleichspannungswandler 20 geführte elektrische Strom erfasst, also der elektrische Strom, der zum Aufrechterhalten der elektrischen Spannung des Hochvoltbordnetzes 10 erforderlich ist. Auch hier wird in dem fünften Arbeitsschritt 66 die Schalteinheit 30 geschlossen, wobei der Gleichspannungswandler 20 solange betrieben und mittels dessen elektrische Energie von dem Niedervoltbordnetz 22 in das Hochvoltbordnetz 10 geleitet wird, bis die Schalteinheit 30 vollständig geschlossen ist. Somit sind bei dieser Variante die Spannungsdifferenzen zwischen der Batterieeinheit 28 und dem Hochvoltbordnetz 10 vergleichsweise gering, auch bei einer vergleichsweise großen Energieentnahme aus dem Hochvoltbordnetz 10, beispielsweise aufgrund einer verstärkten Selbstentladung, weswegen eine Belastung verringert ist.

Zudem wird anhand des sich ergebenden elektrischen Stroms von dem Niedervoltbordnetz 22 in das Hochvoltbordnetz 10 zum Halten der elektrischen Spannung des Hochvoltbordnetzes 10 eine Diagnose durchgeführt. Sofern der fließende elektrische Strom größer als 0,5 A ist, liegt eine Fehlfunktion vor, wie beispielsweise ein Kurzschluss. Wenn dies festgestellt wurde, wird eine entsprechende Mitteilung ausgegeben, sodass ein Nutzer des Kraftfahrzeugs 2 eine Werkstatt aufsuchen kann. Zusammenfassend wird insbesondere mittels der Diagnose eine Fehlfunktion oder ein Fehler identifiziert. Sofern die elektrische Spannung im Vergleich zur Enivartung zu schnell steigt, wird angenommen, dass eine der Leitungen des Hochvoltbordnetzes 10 gelöst ist. Falls die elektrische Spannung zu langsam steigt, wird angenommen, dass zu große Kapazitäten vorhanden sind, insbesondere dass ein Kurzschluss vorliegt. Wenn mittels des Gleichspannungswandlers 20 die elektrische Spannung stabil gehalten wird, wird der sich ergebende elektrische Strom ermittelt, sodass ein unzulässiger Verbraucher identifiziert werden kann, wobei insbesondere das Vorliegen eines Kurzschlusses bereits ausgeschlossen wurde.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Karosserie
- 8: Hauptantrieb
- 10: Hochvoltbordnetz
- 12: erstes Nebenaggregat
- 14: Ladeanschluss
- 16: Anschlusseinheit
- 18: Ladeschütz
- 20: Gleichspannungswandler
- 22: Niedervoltbordnetz
- 24: zweites Nebenaggregat
- 26: Batterie
- 28: Batterieeinheit
- 30: Schalteinheit
- 32: Anschluss
- 34: Schütz
- 36: Sicherung
- 38: Unterbereich
- 40: Batteriemodul
- 42: Batteriezelle
- 44: Unteranschluss
- 46: Verschaltungseinheit
- 48: Schalter
- 50: Steuergerät
- 52: Computer
- 54: Speicher
- 56: Computerprogrammprodukt
- 58: Verfahren
- 60: erster Arbeitsschritt
- 62: zweiter Arbeitsschritt
- 64: dritter Arbeitsschritt
- 66: vierter Arbeitsschritt
- 68: fünfter Arbeitsschritt
- 70: sechster Arbeitsschritt

## Patentansprüche

1. Verfahren (58) zum Betrieb eines Kraftfahrzeugs (2), das ein Hochvoltbordnetz (10) und ein Niedervoltbordnetz (22) umfasst, die mittels eines Gleichspannungswandlers (20) verbunden sind, wobei das Hochvoltbordnetz (10) über eine Schalteinheit (30) mit einer Batterieeinheit (28) verbunden ist, die zwei Unterbereiche (38) aufweist, die mittels einer Verschaltungseinheit (46) elektrisch in Reihe und elektrisch parallel schaltbar sind, bei welchem
- die Schalteinheit (30) geöffnet wird,
- mittels der Verschaltungseinheit (46) die Unterbereiche (38) elektrisch parallel verschaltet werden,
- mittels des Gleichspannungswandlers (20) elektrische Energie von dem Hochvoltbordnetz (10) in das Niedervoltbordnetz (22) geleitet wird, sodass sich die elektrische Spannung des Hochvoltbordnetzes (10) reduziert, und
- wenn die elektrische Spannung des Hochvoltbordnetzes (10) sich um nicht mehr als einen Toleranzwert von der an der Batterieeinheit (28) anliegenden elektrischen Spannung unterscheidet, die Schalteinheit (30) geschlossen wird.

2. Verfahren (58) nach Anspruch 1,
**dadurch gekennzeichnet,**
**dass** eine Geschwindigkeit des Energietransfers mittels des Gleichspannungswandlers (20) bei einer Annäherung der elektrischen Spannung des Hochvoltbordnetzes (10) an die an der Batterieeinheit (28) anliegenden elektrischen Spannung reduziert wird.

3. Verfahren (58) nach Anspruch 1 oder 2,
**dadurch gekennzeichnet,**
**dass** mittels des Gleichspannungswandlers (20) solange elektrische Energie von dem Hochvoltbordnetz (10) in das Niedervoltbordnetz (22) geleitet wird, bis die elektrische Spannung des Hochvoltbordnetzes (10) unterhalb der an der Batterieeinheit (28) anliegenden elektrischen Spannung ist, und dass nachfolgend mittels des Gleichspannungswandlers (20) elektrische Energie von dem Niedervoltbordnetz (22) in das Hochvoltbordnetz (10) geleitet wird, sodass die elektrische Spannung des Hochvoltbordnetzes (10) erneut ansteigt.

4. Verfahren (58) nach Anspruch 3,
**dadurch gekennzeichnet,**
**dass** mittels des Gleichspannungswandlers (20) elektrische Energie von dem Niedervoltbordnetz (22) solange in das Hochvoltbordnetz (10) geleitet wird, bis die Schalteinheit (30) geschlossen ist.

5. Verfahren (58) nach Anspruch 4,
**dadurch gekennzeichnet,**
**dass** anhand des sich ergebenden elektrisch Stroms von dem Niedervoltbordnetz (22) in das Hochvoltbordnetz (10) eine Diagnose durchgeführt wird.

6. Verfahren (58) nach einem der Ansprüche 1 bis 5,
**dadurch gekennzeichnet,**
**dass** nachdem die Schalteinheit (30) geschlossen wurde, das Hochvoltbordnetz (10) mit einem Ladeanschluss (14) erstellt wird.

7. Kraftfahrzeug (2), das ein Hochvoltbordnetz (10) und ein Niedervoltbordnetz (22) umfasst, die mittels eines Gleichspannungswandlers (20) verbunden sind, wobei das Hochvoltbordnetz (10) über eine Schalteinheit (30) mit einer Batterieeinheit (28) verbunden ist, die zwei Unterbereiche (38) aufweist, die mittels einer Verschaltungseinheit (46) elektrisch in Reihe und elektrisch parallel schaltbar sind, und das gemäß einem Verfahren (58) nach einem der Ansprüche 1 bis 6 betrieben ist.

8. Computerprogrammprodukt (56) umfassend Befehle, die bei der Ausführung des Programms durch einen Computer (52) diesen veranlassen, ein Verfahren (58) nach einem der Ansprüche 1 bis 6 auszuführen.
